(19) Europäisches Patentamt
European Patent Office
Office européen des brevets

(11) **EP 3 570 073 A1**

(12) **EUROPEAN PATENT APPLICATION**

(43) Date of publication:
**20.11.2019 Bulletin 2019/47**

(51) Int Cl.:
***G01S 19/07*** (2010.01)

(21) Application number: **19173685.9**

(22) Date of filing: **10.05.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.05.2018 NO 20180681**

(71) Applicant: **Indra Navia AS**
**1383 Asker (NO)**

(72) Inventors:
• **Lavik, Linda**
**0680 OSLO (NO)**
• **Pedersen Topland, Morten**
**1344 HASLUM (NO)**
• **Stakkeland, Morten**
**0873 OSLO (NO)**

(74) Representative: **Zacco Norway AS**
**Haakon VII's gate 2**
**PO Box 2003 Vika**
**0125 Oslo (NO)**

(54) **MULTI FREQUENCY MONITOR FOR DETECTING IONOSPHERIC AND TROPOSPHERIC DISTURBANCES**

(57) System and method for a Ground Based Augmentation System (GBAS) for detecting ionospheric and tropospheric disturbances using Multi Frequency Monitor. Receiving signals from a plurality of receiver pairs and determining a monitor measurement of tropospheric delay variation using data from at least one pair of the plurality of receivers. Determining a monitor measurement of the sum of tropospheric and the sum of ionospheric delay variations using data from the at least one pair of the plurality of receivers. Combining monitor measurements of tropospheric delay variations and of ionospheric delay variations into an ionospheric delay estimate.

Figure 3

**Description**

TECHNICAL FIELD

The present invention relates to a Ground Based Augmentation System for augmentation of satellite navigation constellations for use in aircraft operations, and problems related to ionospheric effects, and in particular for detecting ionospheric anomalies in for the Ground Based Augmentation System (GBAS).

BACKGROUND ART

The Ground Based Augmentation System (GBAS) Approach Service Type D (GAST D) standard shares the mitigation of an ionospheric gradient threat between the ground and Airborne Receivers. This leads to the need for an Ionospheric Gradient Monitor (IGM) located in a Ground Station in order to ensure that the integrity of the system is not compromised in the presence of an ionospheric gradient. A monitor in this context can be viewed as a set of processing steps based on signal processing principles, designed to detect faults or disturbances in the signal that may cause unacceptable errors in the range or position being computed in the Airborne Receiver, on the basis of the corrections generated in the GBAS Ground Station.

The principle of a GBAS is in general: A Ground Station has detailed knowledge of its position and is therefore able to correct the satellite signals across a radio link to users, so that all errors that are correlated between the Ground Station and the user can be minimized or cancelled. Correlated errors are typically errors due to ionospheric delay, tropospheric delay, satellite clock and orbit parameter inaccuracy. By use of differential techniques, errors can be reduced depending on range to the user, signal delay and rate of the corrections..

The GBAS Ground Station is responsible for detecting any condition in the satellite or the environment that may cause errors in the signal that will not be compensated for by the Ground Station corrections that are transmitted to the Airborne Receiver through VHF.

One such condition is deflection of the satellite signal in the ionosphere, causing propagation delays. Under normal conditions, the ionosphere is sufficiently uniform that the GBAS Ground Station and an aircraft within a reasonable, practical distance are affected in a similar way, such that the residual errors after correction are negligible. However, disturbances in the ionosphere may cause the aircraft's Airborne Receiver and the Ground Station to be affected by significantly different propagation delays. Such conditions include e.g. ionospheric storms and plasma bubbles.

Previous solutions using phase measurements to monitor for ionospheric gradients were prone to several problems. One of the problems is if the tropospheric gradient and ionospheric gradient impact the phase measurements in opposite directions, part or all of the ionospheric delay may become invisible to the ionospheric gradient monitor, confounding the monitor. Another problem is when there is no ionospheric gradient to detect, but a tropospheric gradient is present, this could falsely trigger the monitor. This could cause the monitor to issue false alarms, which could in turn cause violation of system level continuity requirements, which are also important for flight safety. Other solutions resolve the problems related to confounding and false alerts, but has some practical implementation issues, such as requiring longer baselines, with a wider spread of receivers, which could be problematic on many airports. A baseline is constituted by two geographically separated antennas with associated receivers, and the vector between them.

SUMMARY OF THE INVENTION

A ground Based Augmentation System (GBAS) comprising a plurality of receiver pairs configured to receive satellite signals via respective antennas, wherein each pair of antennas constitutes a baseline and at least one receiver per antenna is a multiple frequency receiver. The GBAS further comprises of a processor configured to receive data derived from satellite signals received by said plurality of receiver pairs and estimate tropospheric delay variations and ionospheric delay variations on the received satellite signals based on data received from at least one pair of said plurality of receivers. Combining estimated tropospheric delay variations and estimated ionospheric delay variations from said at least one pair of the plurality of receivers into an ionospheric delay estimate.

Additional receiver(s) can be configured to use the same antenna. The processor can be configured to estimate said tropospheric delay variations and said ionospheric delay variations using estimates of integer or half-integer ambiguity differences. The system outputs an alert by excluding the Ranging Source from transmission to the Airborne Receivers when the ionosphere estimate exceeds a predefined threshold. Measurements of ionospheric delay variation using carrier-phase double differences across receiver baselines are representative of an ionospheric gradient.

A method of operating an ionosphere gradient monitor comprising of receiving signals from a plurality of receiver pairs and determining a monitor measurement of tropospheric delay variation using data from at least one pair of the plurality of receivers. Furthermore the method determining a monitor measurement of the sum of tropospheric and the sum of ionospheric delay variations using data from the at least one pair of the plurality of receivers. Combining monitor measurements of tropospheric delay variations and of ionospheric delay variations into an ionospheric delay estimate.

The method can further comprise of calculating carrier-phase double differences 601 for at least two frequencies using data from a first and a second antenna eliminating receiver and satellite clock errors. Calculating Geometry Free Double Differences (GFDD) 602, using the double differences and a calculated range and obtaining estimated ambiguities 603 by calculating the average of GFDD over a period and removing integer ambiguities by calculating the unbiased Geometry Free Double Differences;

calculating the tropospheric delay variation and the ionospheric delay variation 604; verifying 605 the estimate of the integer ambiguities and transmitting 606 corrections of the Ranging Source. If the estimate integer ambiguities is not verified or any of the previous steps fails, excluding the Ranging Source from the transmission 606.

BRIEF DESCRIPTION OF THE DRAWINGS

FIG. 1 is an illustration of a GBAS Architecture;

FIG. 2 is an illustration of the inflight Alert Limits and Protection Levels;

FIG. 3 is an illustration of an Ionospheric front;

FIG. 4a is a block diagram of an exemplary Ground Station with Multi Frequency Monitor to one embodiment of the present disclosure;

FIG. 4b is a block diagram of an exemplary Ground Station with Single Frequency Receiver and Multi Frequency Receiver to one embodiment of the present disclosure;

FIG. 5 is a Probability Density Function (PDF) of noise and signal + noise.

FIG. 6 is a flow diagram of an example method of obtaining an ionospheric estimate;

DETAILED DESCRIPTION

One of the objectives of the invention is separating ionospheric and tropospheric effect on Ranging Source phase measurements, mitigating the problems related to confounding and significantly reducing the problems of false alerts due to tropospheric effects in ionospheric gradient monitoring. The Ranging Source is a source of Global Navigation Satellite System (GNSS) signal. The invention also enables use of relatively short baselines, in the order of a few hundred meters, reducing civil works and infrastructure costs in comparison with that required to implement GBAS Ground Stations with longer baselines. Furthermore, it enables the use of GNSS receivers with no assurance level or lower assurance level than would be required for the particular application, such as in this case aircraft approach, landing and rollout, in concert with a receiver with sufficient assurance level, but fewer observables.

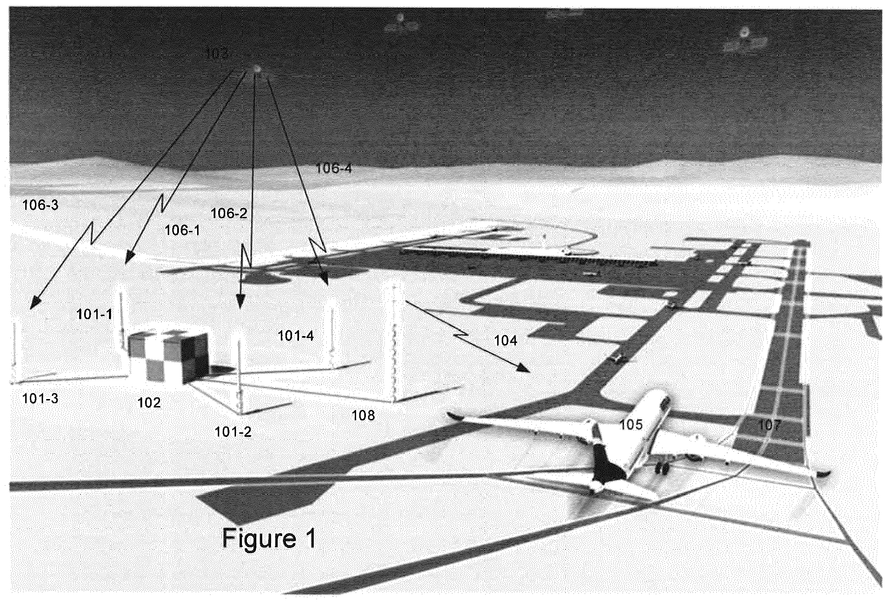

Figure 1 shows an example of an embodiment of the GBAS application with a Ground Station 102 with four antennas 101 monitoring GNSS signals from a satellite 103, an antenna 104 sending corrections, integrity information and approach data 104 to an aircraft 105 via an Airborne Receiver. The GBAS application monitors the satellite signals 106 and the environment, such as ionospheric and radio frequency interference, detecting if there could be errors in the satellite signal 106 that cannot be corrected for or that could decorrelate too steeply for the Airborne Receiver to achieve its accuracy targets. The Ground Station 102 has nominally four high performance antennas 101 monitoring GNSS signals 106, ensuring detection of errors such as for instance excessive multipath, and to set up monitors over a number of baselines for detecting errors in the environment. The Ground Station 102 can also comprise one or several control units, e.g. installed in the control tower. Rigorous development and verification processes for software and hardware ensure that no design error may cause erroneous signals to be emitted, or GNSS signal errors to go undetected.

Probabilistic safety assessment processes are carried out showing that all potential internal errors have been taken into account and mitigated in the design, so that they cannot cause a misleading signal to be sent on air 104. Statistical analysis is carried out, addressing all the monitors ensuring that no dangerous error in the satellite 103 or in the environment can go undetected. A VHF receiver function is monitoring the transmitted signal 104 to ensure that the signal actually sent to the Airborne Receiver, was as intended.

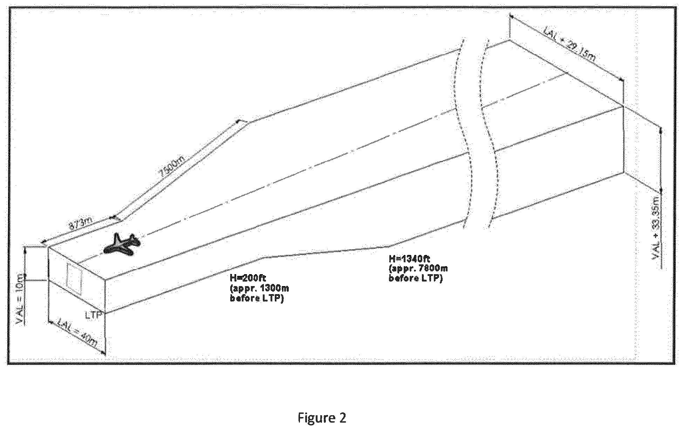

The approach data, or Final Approach Segment (FAS) comprises of a WGS-84 point in each end of the runway and an approach angle, constructing the approach the aircraft is going to use. The Airborne Receiver sets up an approach path 107 based on the received corrections and FAS data. Using the received integrity information and parameters calculated internally, a set of protection levels is calculated. The size of the protection levels increases with increasing uncertainty of the computed aircraft position. FIG. 2 shows an embodiment of Alert Limits and Protection Levels in an approach path. The approach path is flagged if the uncertainty, represented by the Vertical Protection Level and Lateral Protection Level, becomes larger than a predefined set of thresholds, such as Vertical Alert Limit and Lateral Alert Limit.

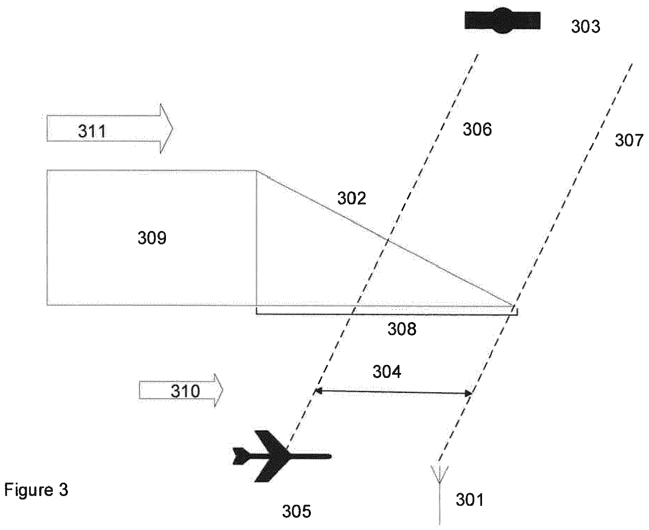

Fig. 3 shows an illustration of an Ionospheric front 309 with slope 302 and width 308 moving with speed 311 in the same direction as the aircraft 305 with speed 310, causing the aircraft 305 and the Ground Station 301 to be affected by significantly different propagation delays 306, 307 because of the distance between lines of sight 304 to the GNSS Ranging Source 303. Electromagnetic signals propagating through the ionosphere 306, 307 are subject to refraction. For GNSS, this causes delays in the signal arrival time, impacting the measurement of propagation time, which is an important parameter in position determination and other functions vital to navigation. GBAS primarily uses code range measurements for navigation, smoothed by instantaneous phase measurements for reduction of noise. These measurements are subject to refraction in the ionosphere. In case of disturbances in the ionosphere, the Ranging Source line of sight to the GBAS Ground Station and the Airborne Receiver may cause the signals 306, 307 to propagate through different ionospheric conditions so that the signals are affected differently. In addition, error accumulation in the smoothing filters may cause additional differential error. This could impact the integrity of the computed aircraft position, which is important for flight safety. Ranging Source phase measurements are used in various monitors required in order to ensure the integrity of the ranging signal, hereunder one ionospheric monitor, the IGM (Ionospheric Gradient Monitor). Since, for previous solutions for the IGM, disturbances in the troposphere may confound the IGM so that it is unable to detect the ionospheric threat, or cause false alerts, it is therefore necessary to remove, or at least reduce, the effect of the troposphere from the Ionospheric Gradient Monitor in order to be able to detect disturbances in the ionosphere when also tropospheric disturbances are present.

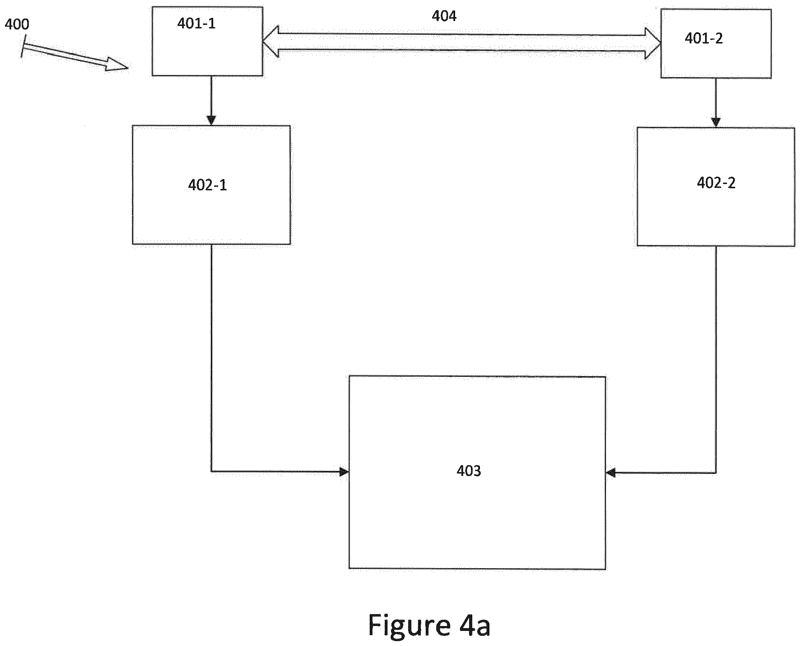

Embodiments of the invention seek to mitigate the problems related to confounding and false alerts due to tropospheric effects by separating ionospheric and tropospheric effect on the Ranging Source phase measurements. Fig. 4a shows a Ground Station 400 including a plurality of Multi Frequency (MF) receivers 402 and a processor 403. The MF receivers 402 are reference receivers, wherein each of the receivers 402 is a radio frequency receiver with an antenna 401. During operation, the MF receivers 402 receive radio frequency signals from satellites. The MF receivers 402 are communicatively coupled to the processor 403 via a communication link, and outputs measurements of code range and instantaneous phase. While two MF receivers are shown in FIG. 4a, it is to be understood that Ground Station 400 can include more receivers.

According to one aspect of the invention an algorithm separating ionospheric and tropospheric effects is provided. The ionospheric and tropospheric effects are estimated by an algorithm, which in the following is described for one multi frequency receiver baseline (404). An MF receiver baseline can be defined as the vector between two geographically separated antennas (401-1, 401-2), such as Reference Receiver Antenna (RRA), with one MF receiver (402-1, 402-2) connected to each of the antenna (401-1, 401-2). The algorithm can be repeated for all MF receiver (402-n) baselines in the GBAS Ground Station.

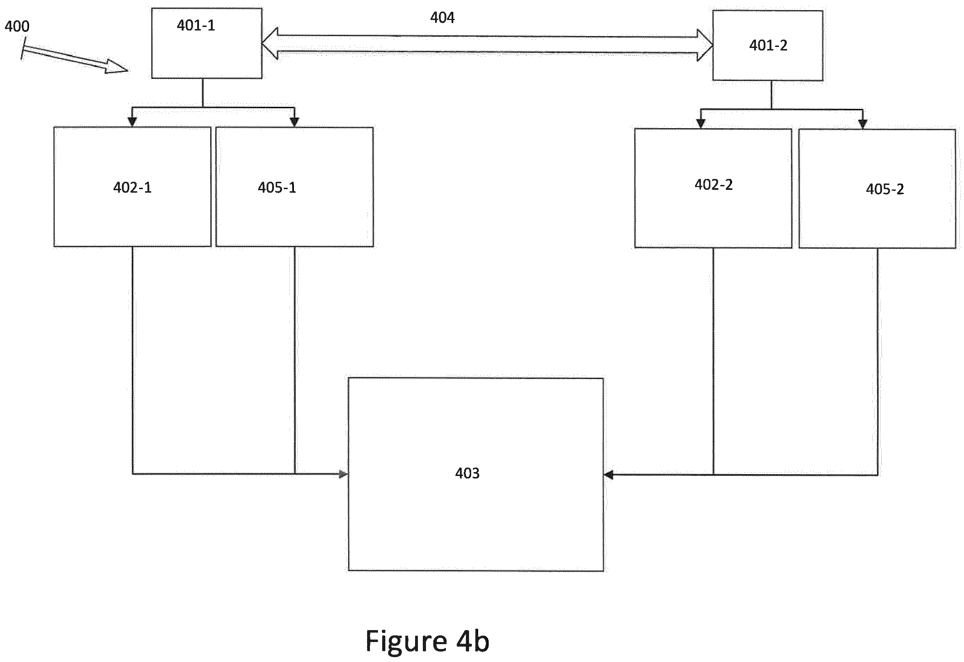

In cases where the assurance level of a MF receiver is low, the MF receiver cannot be fully trusted. Ensuring integrity of the MF receiver with low assurance can be done in several ways. One way is to compare the MF estimate of the sum of ionospheric and tropospheric effect with an estimate of this sum from a Single Frequency (SF) receiver with adequate assurance level for the purpose. Fig. 4b shows an embodiment wherein a Ground Station 400 comprises of a plurality of pairs of a Single Frequency (SF) receiver 405-1 and a MF receiver 402-1 and a processor 403. The pair of receivers, 405-1 and 402-1, are using the same antenna 401. During operation, the SF receivers 405 and MF receivers 402 receive radio frequency signals from satellites. The SF receivers 405 and MF receivers 402 are communicatively coupled to the processor 403 via a communication link. The processor 403 can compare the MF estimate of the sum of ionospheric and tropospheric effect with the SF estimate of the sum of ionospheric and tropospheric effect. If this difference exceeds a threshold, it is caused by a MF receiver fault. Another option is to use the MF receiver estimates together with the SF receiver estimates to interpret the output of an IGM using only the SF estimate of the sum of ionospheric and tropospheric effect. In this case an ionospheric gradient detection is only declared when both the MF estimate of ionospheric gradient and the SF estimate of the sum of ionospheric and tropospheric gradient result in exceedance of the respective detection thresholds. This prevents false alarms caused by tropospheric gradients. It is necessary to use the MF estimate of tropospheric gradient to detect conditions which would confound an IGM using the SF estimate of the sum of ionospheric and tropospheric gradient, i.e. cases where an ionospheric gradient is masked by a tropospheric gradient with opposite direction or sign. In this case the Ranging Source is excluded by the GBAS Ground Station, so that no valid corrections will be transmitted for this Ranging Source, as the IGM using the SF estimate may not comply with required performance. If the MF receiver complies to a sufficiently high assurance level, then an IGM using the MF estimates of ionospheric and tropospheric effect can be used to detect ionospheric gradients, and the SF's high assurance level receiver estimates are not needed. While two sets of receivers are shown in FIG. 4b, it is to be understood that Ground Station 400 can include more receivers.

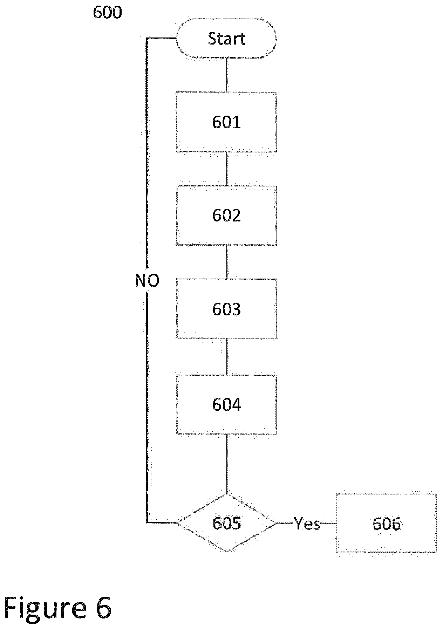

Fig. 6 shows a flow diagram of an embodiment of the invention of obtaining an ionospheric estimate. The method starts by receiving Ranging Source measurements from a plurality of receivers. Calculating carrier-phase double differences (601) using measurements from a Ranging Source, measurements from another Ranging Source(s) used as reference, and measurements from a first and a second antenna for at least two frequencies. Calculating Geometry Free Double Differences (GFDD) (602), using the double differences and a calculated range. Obtaining estimated ambiguities (603) by calculating the average of GFDD over a period and removing integer ambiguities by calculating the unbiased Geometry Free Double Differences. Calculating the tropospheric gradient and the ionospheric gradient (604). Verifying (605) the estimate integer ambiguities and transmitting (606) corrections of the Ranging Source. If the estimate integer ambiguities are not verified or any of the previous steps fails, the Ranging Source is excluded from transmission (606).

The first step of an algorithm is to difference carrier-phase measurements from a first Ranging Source being monitored with the carrier-phase measurements from a second Ranging Source used as reference for each frequency. This eliminates the Ground Station receiver clock error for each frequency. Each carrier-phase measurement contains an ambiguity which is an unknown integer, or a half integer, depending on the receiver used. In the following we assume that it is an integer. The differenced carrier-phase measurements contain unknown integer ambiguity differences which appear as one unknown integer in each difference. The second step is to form carrier-phase double differences to remove satellite clock errors. This is done by differencing across two receivers constituting a baseline, i.e. the differenced carrier-phase measurements from the first step for the first receiver are differenced with the differenced carrier-phase measurements from the first step for the second receiver. Thus, the integer ambiguity differences from the first receiver are differenced with the integer ambiguity differences from the second receiver. This results in an ambiguity term in each double difference which appears as one unknown integer. A carrier-phase double difference is calculated for each Ranging Source, each frequency and each baseline. The carrier-phase double differences can also be obtained by differencing across receivers first, and differencing with a Ranging Source used as reference second. To remove geometry dependence in the estimates, Geometry Free Double Differences (GFDD) are calculated by subtracting a range dependent term from each double difference. This term equals difference between geometric range from a first Reference Receiver Antenna (RRA) to the Ranging Source being monitored and the geometric range to the reference Ranging Source, minus the same difference as seen from a second RRA. The ranges are calculated using current ephemeris information and the time of transmission of the signal from the Ranging Source. The unknown integer in each GFDD creates a bias, and the integer is estimated during an initialization period where the Ranging Source being monitored is still not in use. The GFDD is recorded during this time period. For each GFDD the integer is calculated by computing the average GFDD for the initialization period and rounding it off to the nearest integer. In the half integer case, the average GFDD must be rounded off to the nearest half integer.

For each GFDD an Unbiased GFDD (UGFDD) is calculated using the integer estimates. Using the UGFDD from two frequencies, ionospheric and tropospheric effect can be separated, since tropospheric delay is the same for both frequencies, while ionospheric delay is different. This allows the computation of a discriminator to monitor ionospheric delay variation, and a discriminator to monitor tropospheric delay variation. The delay variation is defined as the difference in delay for the individual lines-of-sight between the antennas and Ranging Sources.

MULTI FREQUENCY IGM ALGORITHM SPECIFICATION - 1 DIMENSION, ONE SATELLITE PAIR

The following algorithm is an embodiment of the invention and specifies how the ionospheric estimator can be implemented for a given satellite and a pair of receiver.

Consider one specific satellite $i$. Denote the phase measurement obtained by receiver 1 at time t at frequency L1 for this specific satellite by $\phi_{L1,1}^i(t)$. The following models apply for the carrier phase measurements obtained at the frequencies L1 and LX (L2 or L5). Let both measurements be given units of cycles. Omit the time variable from the notation for simplicity, and instructive models of the carrier phase measurements are thus given by:

$$\phi_{L1,1}^i = \left(r_1^i - I_{L1,1}^i + T_{\phi,1}^i\right) \cdot \frac{1}{\lambda_{L1}} + f_{L1}\left(\delta_{u,1} + \delta_s^i\right) + N_{L1,1}^i + \epsilon_{L1,1}^i \qquad (1)$$

$$\phi_{LX,1}^i = \left(r_1^i - I_{LX,1}^i + T_{\phi,1}^i\right) \cdot \frac{1}{\lambda_{LX}} + f_{LX}\left(\delta_{u,1} + \delta_s^i\right) + N_{LX,1}^i + \epsilon_{LX,1}^i \qquad (2)$$

- $I_{L1,1}^i$, $I_{LX,1}^i$ ionospheric delay (range) at L1 and L2/L5 (m) for satellite $i$ at receiver 1

- $T_1^i$ troposphere delay (m) for satellite i at receiver 1

- $\delta_{u,1}$ receiver clock error (s) for receiver 1

- $\delta_s^i$ satellite clock error (s) for satellite i

- $N_{L1,1}^i$, $N_{LX,1}^i$ integer number of phase ambiguities for measurement on frequency L1 and L2/L5 for t at receiver 1

- $\epsilon_{L1,1}^i$, $\epsilon_{LX,1}^i$ measurement effect (cycles) at L1 and L2 or L5

- $\lambda_{L1}$, $\lambda_{LX}$ wavelengths at L1 and L2/L5 (m)

- $c$ speed of light (m/s)

- $r_1^i$ range from satellite i to receiver 1 at time of transmission

Define the ionospheric gradient parameter for satellite i as

$$\alpha_{12}^i = \frac{I_{L1,1}^i - I_{L1,2}^i}{|x_b|} \tag{3}$$

Correspondingly, define the tropospheric gradient parameter as

$$\gamma_{12}^i = \frac{T_1^i - T_2^i}{|x_b|} \tag{4}$$

The variable $|x_b|$ is the baseline length, the distance between the phase centres of the antenna 1 and 2.

CALCULATE GEOMETRY FREE DOUBLE DIFFERENCES

Single differences

In order to eliminate the Ground Station receiver clock error, use a reference satellite j, and calculate the single differences

$$\delta_{LX,1}^{ij} = \phi_{LX,1}^i - \phi_{LX,1}^j \tag{5}$$

$$\delta_{L1,1}^{ij} = \phi_{L1,1}^i - \phi_{L1,1}^j \tag{6}$$

Instructive models of the single differences are given in the following two equations.

$$\begin{aligned}
\delta_{LX,1}^{ij} &= (r_1^i - r_1^j) - (I_{LX,1}^i - I_{LX,1}^j) + (T_1^i - T_1^j) + c \cdot (\delta_s^i - \delta_s^j) + \lambda_{LX}(N_{LX,1}^i - N_{LX,1}^j) \\
&\quad + \epsilon_{LX,1}^i - \epsilon_{LX,1}^j \\
&= r_1^{ij} - (I_{LX,1}^i - I_{LX,1}^j) + (T_1^i - T_1^j) + c \cdot (\delta_s^i - \delta_s^j) + \lambda_{LX}N_{LX,1}^{ij} + \epsilon_{LX,1}^{ij}
\end{aligned} \tag{7}$$

$$\begin{aligned}
\delta_{L1,1}^{ij} &= (r_1^i - r_1^j) - (I_{L1,1}^i - I_{L1,1}^j) + (T_1^i - T_1^j) + c \cdot (\delta_s^i - \delta_s^j) + \lambda_{L1}(N_{L1,1}^i - N_{L1,1}^j) + \epsilon_{L1,1}^i \\
&\quad - \epsilon_{L1,1}^j = r_1^{ij} - (I_{L1,1}^i - I_{L1,1}^j) + (T_1^i - T_1^j) + c \cdot (\delta_s^i - \delta_s^j) + \lambda_{L1}N_{L1,1}^{ij} + \epsilon_{L1,1}^{ij}
\end{aligned} \tag{8}$$

In these two equations, the following variables were defined:

$$N_{LX,1}^{ij} = N_{LX,1}^{i} - N_{LX,1}^{j}$$

$$\epsilon_{LX,1}^{ij} = \epsilon_{LX,1}^{i} - \epsilon_{LX,1}^{j}$$

$$N_{L1,1}^{ij} = N_{L1,1}^{i} - N_{L1,1}^{j}$$

$$\epsilon_{L1,1}^{ij} = \epsilon_{L1,1}^{i} - \epsilon_{L1,1}^{j}$$

$$r_1^{ij} = r_1^{i} - r_1^{j}$$

DOUBLE DIFFERENCES

In order to eliminate the satellite clock errors, define the double differences using data from antennas 1 and 2.

$$\Delta_{LX,12}^{ij} = \delta_{LX,1}^{ij} - \delta_{LX,2}^{ij} \tag{9}$$

$$\Delta_{L1,12}^{ij} = \delta_{L1,1}^{ij} - \delta_{L1,2}^{ij} \tag{10}$$

Instructive models of the double differences are given in the two following equations.

$$\begin{aligned}
\Delta_{LX,12}^{ij} &= r_1^{ij} - r_2^{ij} - \left(I_{LX,1}^{i} - I_{LX,1}^{j}\right) - \left(I_{LX,2}^{i} - I_{LX,2}^{j}\right) + \left(T_1^{i} - T_1^{j}\right) - \left(T_2^{i} - T_2^{j}\right) \\
&\quad + \lambda_{LX}\left(N_{LX,1}^{ij} - N_{LX,2}^{ij}\right) + \epsilon_{LX,1}^{ij} - \epsilon_{LX,2}^{ij} \\
&= r_{12}^{ij} - \left(\frac{\lambda_{LX}}{\lambda_{L1}}\right)^2 \left(\alpha_{12}^{i} - \alpha_{12}^{j}\right)|x_b| + \left(\gamma_{12}^{i} - \gamma_{12}^{j}\right)|x_b| + \lambda_{LX}N_{LX,12}^{ij} \\
&\quad + \epsilon_{LX,12}^{ij}
\end{aligned} \tag{11}$$

$$\begin{aligned}
\Delta_{L1,12}^{ij} &= r_1^{ij} - r_2^{ij} - \left(I_{L1,1}^{i} - I_{L1,1}^{j}\right) - \left(I_{L1,2}^{i} - I_{L1,2}^{j}\right) + \left(T_1^{i} - T_1^{j}\right) - \left(T_2^{i} - T_2^{j}\right) \\
&\quad + \lambda_{L1}\left(N_{L1,1}^{ij} - N_{L1,2}^{ij}\right) + \epsilon_{L1,1}^{ij} - \epsilon_{L1,2}^{ij} \\
&= r_{12}^{ij} - \left(\alpha_{12}^{i} - \alpha_{12}^{j}\right)|x_b| + \left(\gamma_{12}^{i} - \gamma_{12}^{j}\right)|x_b| + \lambda_{L1}N_{L1,12}^{ij} + \epsilon_{L1,12}^{ij}
\end{aligned} \tag{12}$$

In these equations, the following variables were defined:

$$N_{LX,12}^{ij} = N_{LX,1}^{ij} - N_{LX,2}^{ij}$$

$$N_{L1,12}^{ij} = N_{L1,1}^{ij} - N_{L1,2}^{ij}$$

$$\epsilon_{LX,12}^{ij} = \epsilon_{LX,1}^{ij} - \epsilon_{LX,2}^{ij}$$

$$\epsilon_{L1,12}^{ij} = \epsilon_{L1,1}^{ij} - \epsilon_{L1,2}^{ij}$$

$$r_{12}^{ij} = r_1^{ij} - r_2^{ij}$$

GEOMETRY FREE DOUBLE DIFFERENCES

Calculate the Geometry Free Double Differences (GFDD), using the double differences and the calculated range to the satellites i and j as inputs.

$$\Gamma_{LX,12}^{ij} = \Delta_{LX,12}^{ij} - r_{12}^{ij} \tag{13}$$

$$\Gamma_{L1,12}^{ij} = \Delta_{L1,12}^{ij} - r_{12}^{ij} \tag{14}$$

The geometric range terms shall be calculated using the current ephemeris, as the distance to the satellite to receiver 1 and 2 at the time of transmission.

$$r_{12}^{ij} = r_1^{ij} - r_2^{ij} = \left(r_1^i - r_1^j\right) - \left(r_2^i - r_2^j\right) \tag{15}$$

The GFDD was constructed by moving the range term in the double difference to the left hand side. Instructive models are given by the two following equations.

$$\Gamma_{LX,12}^{ij} = -\left(\frac{\lambda_{LX}}{\lambda_{L1}}\right)^2 \left(\alpha_{12}^i - \alpha_{12}^j\right)|x_b| + \left(\gamma_{12}^i - \gamma_{12}^j\right)|x_b| + \lambda_{LX}N_{LX,12}^{ij} + \epsilon_{LX,12}^{ij} \tag{16}$$

$$\Gamma_{L1,12}^{ij} = -\left(\alpha_{12}^i - \alpha_{12}^j\right)|x_b| + \left(\gamma_{12}^i - \gamma_{12}^j\right)|x_b| + \lambda_{L1}N_{L1,12}^{ij} + \epsilon_{L1,12}^{ij} \tag{17}$$

ESTIMATE INTEGER AMBIGUITIES

Calculate the GFDD over an initialization period of M samples, which in one embodiment is M=400 samples corresponding to 200 seconds, given that code range and phase measurements are available from the receiver twice per second. Obtain the estimated ambiguities by calculating the average over the period.

$$\widehat{N}_{LX,12}^{ij} = round\left(\frac{1}{M \cdot \lambda_{LX}}\sum_{k=1}^{M}\Gamma_{LX,12}^{ij}(k)\right) \tag{18}$$

$$\widehat{N}_{L1,12}^{ij} = round\left(\frac{1}{M \cdot \lambda_{L1}}\sum_{k=1}^{M}\Gamma_{L1,12}^{ij}(k)\right) \tag{19}$$

REMOVE INTEGER AMBIGUITIES

Calculate the unbiased Geometry Free Double Differences as

$$G_{LX,12}^{ij} = \Gamma_{LX,12}^{ij} - \lambda_{LX}\widehat{N}_{LX,12}^{ij} \tag{20}$$

$$G_{L1,12}^{ij} = \Gamma_{L1,12}^{ij} - \lambda_{L1}\widehat{N}_{L1,12}^{ij} \tag{21}$$

Instructive models of these variables are

$$G_{LX,12}^{ij} = -\left(\frac{\lambda_{LX}}{\lambda_{L1}}\right)^2 (\alpha_{12}^i - \alpha_{12}^j)|x_b| + (\gamma_{12}^i - \gamma_{12}^j)|x_b| + \epsilon_{LX,12}^{ij} \tag{22}$$

$$G_{L1,12}^{ij} = -(\alpha_{12}^i - \alpha_{12}^j)|x_b| + (\gamma_{12}^i - \gamma_{12}^j)|x_b| + \epsilon_{L1,12}^{ij} \tag{23}$$

CALCULATE TROPOSPHERIC DELAY VARIATION

Calculate the tropospheric delay variation by

$$\tau_{12}^{ij} = \frac{\left(\left(\frac{\lambda_{LX}}{\lambda_{L1}}\right)^2 G_{L1,12}^{ij} - G_{LX,12}^{ij}\right)}{|x_b| \cdot \left(\left(\frac{\lambda_{LX}}{\lambda_{L1}}\right)^2 - 1\right)} \tag{24}$$

The tropospheric delay variation can be derived by expanding the equation.

$$\left(\frac{\lambda_{LX}}{\lambda_{L1}}\right)^2 G_{L1,12}^{ij} - G_{LX,12}^{ij}$$

$$= \left(\frac{\lambda_{LX}}{\lambda_{L1}}\right)^2 \left(-(\alpha_{12}^i - \alpha_{12}^j)|x_b| + (\gamma_{12}^i - \gamma_{12}^j)|x_b| + \epsilon_{L1,12}^{ij}\right)$$

$$- \left(-\left(\frac{\lambda_{LX}}{\lambda_{L1}}\right)^2 (\alpha_{12}^i - \alpha_{12}^j)|x_b| + (\gamma_{12}^i - \gamma_{12}^j)|x_b| + \epsilon_{LX,12}^{ij}\right) \tag{25}$$

$$= \left(\left(\frac{\lambda_{LX}}{\lambda_{L1}}\right)^2 - 1\right)(\gamma_{12}^i - \gamma_{12}^j)|x_b| + \left(\frac{\lambda_{LX}}{\lambda_{L1}}\right)^2 \epsilon_{L1,12}^{ij} - \epsilon_{LX,12}^{ij}$$

Dividing by the factor $|x_b| \cdot \left(\left(\frac{\lambda_{LX}}{\lambda_{L1}}\right)^2 - 1\right)$ gives the tropospheric delay variation above.

CALCULATE IONOSPHERIC DELAY VARIATION

Calculate the ionospheric delay variation by

$$\iota_{12}^{ij} = \frac{\left(G_{L1,12}^{ij} - G_{LX,12}^{ij}\right)}{|x_b| \cdot \left(\left(\frac{\lambda_{LX}}{\lambda_{L1}}\right)^2 - 1\right)} \tag{26}$$

The ionospheric estimate can be derived by expanding the equation.

$$G_{L1,12}^{ij} - G_{LX,12}^{ij} = \left(-(\alpha_{12}^i - \alpha_{12}^j)|x_b| + (\gamma_{12}^i - \gamma_{12}^j)|x_b| + \epsilon_{L1,12}^{ij}\right)$$

$$- \left(-\left(\frac{\lambda_{LX}}{\lambda_{L1}}\right)^2 (\alpha_{12}^i - \alpha_{12}^j)|x_b| + (\gamma_{12}^i - \gamma_{12}^j)|x_b| + \epsilon_{LX,12}^{ij}\right) \tag{27}$$

$$= \left(\left(\frac{\lambda_{LX}}{\lambda_{L1}}\right)^2 - 1\right)(\alpha_{12}^i - \alpha_{12}^j)|x_b| + \epsilon_{L1,12}^{ij} - \epsilon_{LX,12}^{ij}$$

Dividing by the factor $\left|x_b\right| \cdot \left(\left(\frac{\lambda_{LX}}{\lambda_{L1}}\right)^2 - 1\right)$ gives the ionospheric delay variation above.

VERIFY ESTIMATED INTEGER AMBIGUITIES

Corrections shall not be transmitted until the estimated integer ambiguities are verified. Calculate the ionospheric and tropospheric delay variation for the whole initialization period used to calculate the integer ambiguities.
Calculate the absolute value of the average of the tropospheric delay variation values over the period

$$\tau_{av} = \left|\frac{1}{M}\sum\nolimits_{k=1}^{M} \tau_{12}^{ij}(k)\right|$$

The integer ambiguities are not verified if any of the following conditions occur:

- The absolute value of the ionospheric delay variation is above the threshold of 150 mm/km at any time during the initialization period.
- The mean tropospheric delay variation over the entire initialization period is above 100 mm/km.
- The absolute value of the tropospheric delay variation is above 150 mm/km at any time during the initialization period.

The integer ambiguities shall be recalculated using a new initialization period if any of the tests above fail. It is, however, consistent with the invention to adjust these criteria and thus recalculate the integer ambiguities at different conditions than those specified in this example.

DELAY VARIATION TESTS

The calculation of ionospheric and tropospheric delay variation can run continuously. The satellite may be invalidated if one of the two following conditions occur:

- The absolute value of the ionospheric delay variation exceeds a threshold of 150 mm/km
- The absolute value of the tropospheric delay variation exceeds a threshold of 350 mm/km

It is, however, consistent with the invention to adjust these criteria and thus invalidate the satellites at different conditions than those specified in this example.

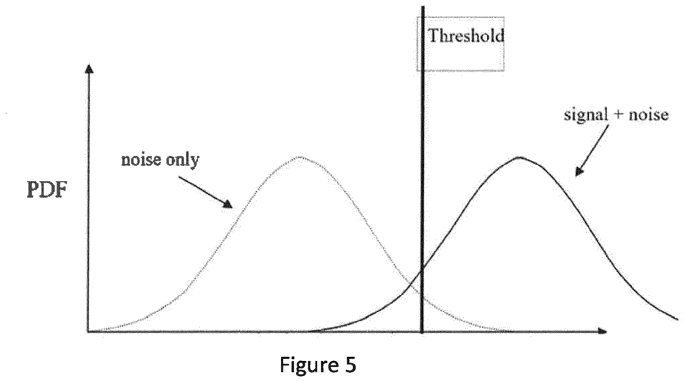

Figure 5 shows an example of use of threshold. According to classic statistical and detection theory, when an observable is impacted by noise, the observable will be distributed according to a Probability Density Function (PDF). The probability of missed detection is the accumulated probability that the sum of a signal we want to detect and the noise is below a detection threshold, and the probability of false alarm represents the accumulated probability of noise only being present, exceeds the detection threshold. In the case of GBAS, the required probability of missed detection is generally absolute (although some budgeting is possible), and the threshold must be set accordingly. The resulting probability of false alarm is dependent on the noise affecting the observable.

**Claims**

1. A Ground Based Augmentation System (GBAS) comprising:

   a plurality of receiver pairs configured to receive satellite signals via respective antennas, wherein each pair of antennas constitutes a baseline and at least one receiver per antenna is a multiple frequency receiver; and
   a processor comprising an ionospheric gradient monitor configured to:

   receive data derived from satellite signals received by said plurality of receiver pairs on at least two different frequencies ;
   estimate tropospheric delay variations and ionospheric delay variations on the received satellite signals based on data received from at least one pair of said plurality of receivers; and
   combine estimated tropospheric delay variations and estimated ionospheric delay variations from said at least one pair of the plurality of receivers into an ionospheric delay variation estimate.

**2.** The system of claim 1, wherein an additional receiver is configured to use the same antenna.

**3.** The system of claim 3, wherein the two receivers configured to use the same antenna are one multiple Frequency receiver and one Single Frequency receiver.

**4.** The system of claim 1, wherein the processor is configured to estimate said tropospheric delay variations and said ionospheric delay variations using estimates of integer or half-integer ambiguity differences.

**5.** The system of claim 1, wherein the system outputs an alert when the ionosphere estimate exceeds a predefined threshold.

**6.** The system of claim 5, wherein the alert comprises excluding data related to the received satellite signals.

**7.** The system of claim 1, wherein measurements of ionospheric delay variation are representative of an ionospheric gradient using carrier-phase double differences across receiver baselines.

**8.** A method of operating an ionosphere gradient monitor, the method comprising:

receiving signals from a plurality of receiver pairs on at least two different frequencies;
determining a monitor measurement of tropospheric delay variation using data from at least one pair of the plurality of receivers;
determining a monitor measurement of the sum of tropospheric and the sum of ionospheric delay variations using data from the at least one pair of the plurality of receivers;
combine monitor measurements of tropospheric delay variations and of ionospheric delay variations into an ionospheric delay variation estimate.

**9.** The method of claim 8, wherein the method further comprising of:

calculating single differences (601) to eliminate the user clock error for the at least two frequencies;
eliminating the satellite clock errors by calculating the double differences (602) using data from a first and a second antenna;
calculating Geometry Free Double Differences (GFDD) (602), using the double differences and a calculated range;
obtaining estimated ambiguities (603) by calculating the average of GFDD over a period and removing integer ambiguities by calculating the unbiased Geometry Free Double Differences;
calculating the tropospheric delay variation and the ionospheric delay variation (604); verifying (605) the estimate integer ambiguities and transmitting (606) corrections of the Ranging Source; and
if the estimate integer ambiguities is not verified or any of the previous steps fails, excluding the Ranging Source from the transmission (606).

Figure 1

Figure 2

Figure 3

Figure 4a

Figure 4b

Figure 5

600

Start

601

602

603

604

605

NO

Yes

606

Figure 6

**EP 3 570 073 A1**

Europäisches Patentamt

European Patent Office

Office européen des brevets

## EUROPEAN SEARCH REPORT

Application Number

EP 19 17 3685

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | OSECHAS OKUARY ET AL: "Distributed ionosphere monitoring by collaborating mobile receivers", IEEE TRANSACTIONS ON AEROSPACE AND ELECTRONIC SYSTEMS, IEEE SERVICE CENTER, PISCATAWAY, NJ, US, vol. 50, no. 4, 1 October 2014 (2014-10-01), pages 2860-2869, XP011567376, ISSN: 0018-9251, DOI: 10.1109/TAES.2014.120843 [retrieved on 2014-12-05] * figure 1 * * sections: I. Introduction II. System Architecture III. Threat Model IV. Proposed Method IV.A, Local Gradient Estimate for Each Satellite V. Simulation Scenario * ----- -/-- | 1-9 | INV. G01S19/07 |

TECHNICAL FIELDS SEARCHED (IPC)

G01S

The present search report has been drawn up for all claims

| Place of search | Date of completion of the search | Examiner |
|---|---|---|
| Munich | 19 September 2019 | Tancredi, Urbano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

Application Number

EP 19 17 3685

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | S SAITO ET AL: "Performance of GAST-D ionospheric gradient monitor studied with low latitude ionospheric disturbance data obtained in a real airport environment", PROCEEDINGS OF THE ION 2015 PACIFIC PNT MEETING,, 20 April 2015 (2015-04-20), pages 815-820, XP055623170, * abstract; figure 1 * * sections: Introduction GAST-D Experimental Prototype and Ionospheric Spatial Gradient Monitor (ISGM) Nominal Performance of ISGM Tropospheric Effects on ISGM Discussion * ----- | 1-9 | |
| A | KHANAFSEH SAMER ET AL: "Carrier Phase Ionospheric Gradient Ground Monitor for GBAS with Experimental Validation", NAVIGATION: JOURNAL OF THE INSTITUTE OF NAVIGATION, INSTITUTE OF NAVIGATION, FAIRFAX, VA, US, vol. 59, no. 1, 1 March 2012 (2012-03-01), pages 51-60, XP056013616, ISSN: 0028-1522 * sections: Introduction Ionospheric Front Monitor Concept * ----- | 1-9 | TECHNICAL FIELDS SEARCHED (IPC) |

The present search report has been drawn up for all claims

| Place of search | Date of completion of the search | Examiner |
|---|---|---|
| Munich | 19 September 2019 | Tancredi, Urbano |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

...............................................................................
& : member of the same patent family, corresponding
    document

EPO FORM 1503 03.82 (P04C01)

page 2 of 2